Europäisches Patentamt

European Patent Office

Office européen des brevets

(11) Publication number: **0 057 781**

**A1**

## (12) EUROPEAN PATENT APPLICATION

(21) Application number: **81302321.5**

(22) Date of filing: **26.05.81**

(51) Int. Cl.³: **B 01 D 53/04**
**B 67 D 5/06**

(30) Priority: **05.02.81 US 231917**

(43) Date of publication of application:
**18.08.82 Bulletin 82/33**

(84) Designated Contracting States:
**BE DE FR GB IT NL SE**

(71) Applicant: **JOHN ZINK COMPANY**
**4401, South Peoria**
**Tulsa, Oklahoma 74103(US)**

(72) Inventor: **Dinsmore, Harold L.**
**3152 N. Vancouver**
**Tulsa Oklahoma(US)**

(72) Inventor: **Schwartz, Robert E.**
**4227 East 52 Place**
**Tulsa Oklahoma(US)**

(72) Inventor: **Tuttle, Willard N.**
**6401 South Vancouver**
**Tulsa Oklahoma(US)**

(74) Representative: **Allen, William Guy Fairfax et al,**
**J.A. KEMP & CO. 14 South Square Gray's Inn**
**London WC1R 5EU(GB)**

(54) Process and apparatus for recovering hydrocarbons from air-hydrocarbon vapour mixtures.

(57) A process and apparatus for recovering hydrocarbons from an air-hydrocarbon vapour mixture. The air-hydrocarbon vapour mixture is caused to flow through a first bed (12, 14) of solid adsorbent, whereby the hydrocarbons are removed from the mixture and a residue gas stream by substantially hydrocarbon-free air is vented to atmosphere and a second bed (14, 12) of solid adsorbent having hydrocarbons adsorbed thereon is desorbed by applying vaccum thereto using a liquid seal vacuum pump (72). The flow pattern is cyclically changed, so that air-hydrocarbon vapour mixture is fed through a bed of solid adsorbent which has just been regenerated. Use of a vacuum pump (72) ensures that a major portion of the hydrocarbons is desorbed. Subsequently feeding a small quantity of heated hydrocarbon-free air into the beds (at 66) causes additional hydrocarbons to be stripped therefrom. The air-hydrocarbon vapour mixture produced in the regeneration of the beds is contacted with a liquid absorbent whereby a major portion of the hydrocarbons are absorbed therefrom and recovered. The feed of the liquid absorbent is divided into two first and second streams, the first stream being heated by passing it in heat-exchange relation with the seal liquid of the vacuum pump which is thus cooled. The first stream is then fed to the absorber at a location below that at which the second relatively cool stream is fed. A liquid coolant is passed through heat transfer coils (21, 23) in the adsorber beds (12, 14) to prevent excessive heating thereof.

./...

*Fig .1.*

- 1 -

DESCRIPTION

"PROCESS AND APPARATUS FOR RECOVERING HYDROCARBONS
FROM AIR-HYDROCARBON VAPOUR MIXTURES"

The present invention relates to a process and apparatus for recovering hydrocarbons from air-hydrocarbon vapour mixtures.

In handling multicomponent hydrocarbon liquids, such as gasolene or kerosene, air-hydrocarbon vapour mixtures are readily produced which cannot be vented directly to the atmosphere due to the resulting pollution and fire or explosion hazard. Consequently, various proposals have been made for removing the hydrocarbon vapours from such mixtures, whereby the remaining air can safely be vented to atmosphere. The removed hydrocarbons are generally liquefied and recombined with hydrocarbon liquid from which they were vapourised, thereby making their recovery economically advantageous.

A process for the recovery of light mixed hydrocarbon vapours from a mixture with air expelled as a result of storage breathing or loading of a vented hydrocarbon vessel is described in U.S. Patent 4066423. The hydrocarbon vapour mixture is passed through a first bed of solid adsorbent, which adsorbs a majority of the hydrocarbons contained in the mixture and the residue gas is substantially hydrocarbon-free air. While this adsorbing is taking place, a second bed of solid adsorbent having hydrocarbons adsorbed therein is regenerated by evacuation. The completeness of the regeneration of the adsorption beds is dependent solely on the degree of vacuum produced in the beds. Because vacuum pumps are incapable of lowering the pressure to zero, some adsorbed hydrocarbons are left, and this reduces the capacity of the beds to adsorb additional hydrocarbons and reduces the service life of the adsorbent.

The hydrocarbon-rich air-hydrocarbon mixture produced as a result of the regeneration of the bed is contacted with a liquid absorbent, whereby hydrocarbons are removed therefrom and the residue gas stream from the absorption step is recycled to the bed through which the inlet air-hydrocarbon mixture is flowing. The liquid absorbent utilised in U.S. Patent 4,066,423 is produced by condensing, by cooling, liquid hydrocarbons from the air-hydrocarbon vapour mixture produced in the evacuation regeneration step.

The hydrocarbon-rich air-hydrocarbon vapour mixture is cooled whereby portions of the hydrocarbons are condensed and such condensed hydrocarbons are circulated into contact with the remaining air-hydrocarbon vapour mixture whereby hydrocarbon vapours are absorbed by the liquids. The use of hydrocarbons which are condensed from the hydrocarbon-rich air-hydrocarbon vapour mixture to contact the remaining air-hydrocarbon vapour mixture results in the inefficient absorption of hydrocarbons from the remaining air-hydrocarbon vapour mixture.

Numerous other suitable processes and apparatus are disclosed, e.g. in U.S. Patents 3,897,193; 3,768,232; 3,867,111; 3,455,089; 3,543, 3,766,283. These all use solid adsorbent for removing hydrocarbons and regeneration of the adsorbent is incomplete, whereby hydrocarbons are left on the adsorbent, reducing the capacity, efficiency and service life thereof.

A problem which has not been addressed or solved in any of the prior art processes or apparatus is the overheating of the beds of solid adsorbent due to the reaction of hydrocarbons contained in the inlet mixture of air and hydrocarbons with air. It has been found that beds of solid adsorbent can reach conditions whereby runaway heating of the beds takes place bringing about an extremely dangerous condition, i.e. a condition whereby the air-hydrocarbon mixtures within the beds as well as the solid adsorbent itself can auto-ignite.

The runaway overheating of the beds of solid adsorbent is most prone to take place in applications wherein large adsorbent beds are used, high ambient temperatures exist, and where the air-hydrocarbon vapour mixtures being processed are mixtures expelled from the loading of vented hydrocarbon vessels such as tank cars and trucks. From these vessels hydrocarbon concentrations in the air-hydrocarbon vapour mixture are high and may contain other hydrocarbon impurities besides those for which the processing system was designed due to previously hauled substances. In addition, the nature of this service requires the adsorption beds to be operated at very low superficial vapour velocities which inhibit heat dissipation. These factors have all combined to give accelerated heating of the beds, i.e. as the temperature of the beds increases greater quantities of materials react causing the temperature to increase at an accelerated rate and rapidly reach an overheated and extremely dangerous condition. In addition, the overheating of the beds of solid adsorbent can severely reduce the efficiency and prevent proper operation of apparatus of which the beds are a part.

The present invention is characterised in that beds of solid adsorbent are cooled to prevent the beds from overheating.

Such a process enables the temperature of the adsorber beds to be controlled without there being any risk of runaway overheating.

An externally supplied source of cooling medium may be used to cool the beds. However, in a preferred process according to the invention the vacuum pumping is carried out using a liquid seal vacuum pump, an air-hydrocarbon mixture containing liquids from said liquid seal vacuum pump and condensed hydrocarbon liquids is produced during the evacuation of adsorber bed, the liquid from the liquid seal pump and said condensed hydrocarbon liquids are separated from each other and from the air-hydrocarbon vapour mixture, the separated vacuum pump liquid is cooled, the cooled vacuum pump liquid being recycled to the liquid seal vacuum pump, the separated condensed hydrocarbon liquid is combined with the hydrocarbon-rich liquid absorbent, and the resulting combined liquid mixture is used as a heat exchange medium to cool said beds. In this way there is no need to use an external cooling medium.

The flow of liquid absorbent may be divided into a first portion and a second portion, the first portion being passed in heat exchange relationship with the seal liquid of the vacuum pump to heat the first portion and cool the seal liquid, the thus heated first portion being contacted with the air-hydrocarbon mixture produced during evaporation and the second portion of the liquid absorbent is also contacted with the air-hydrocarbon mixture produced during evacuation.

This achieves a more complete regeneration of the adsorbent than can be accomplished by prior processes, thereby making the process more efficient, more economical to carry out and increasing the service life of the adsorbent used.

Advantageously, a stream of the liquid from which the hydrocarbon vapours originated is used to absorb the removed hydrocarbons in a simple and economical system, thereby obviating the need for condensing the removed hydrocarbons using elaborate refrigeration or other similar apparatus, which is expensive to install and operate.

A quantity of hydrocarbon-free air may be introduced into the second bed while evacuating said bed,

- 5 -

whereby additional hydrocarbons are stripped from the bed and an additional air-hydrocarbon mixture is produced. The hydrocarbon-free air is advantageously heated prior to introducing into the bed for this purpose, to improve the efficiency of the thus achieved stripping action.

Desirably, the hydrocarbons contained in the inlet air-hydrocarbon mixture are vapourised gasolene light ends, the liquid absorbent utilised being gasolene and the gasolene being continuously recycled between the absorber and a source of stored gasolene.

The invention also contemplates apparatus for carrying out this process.

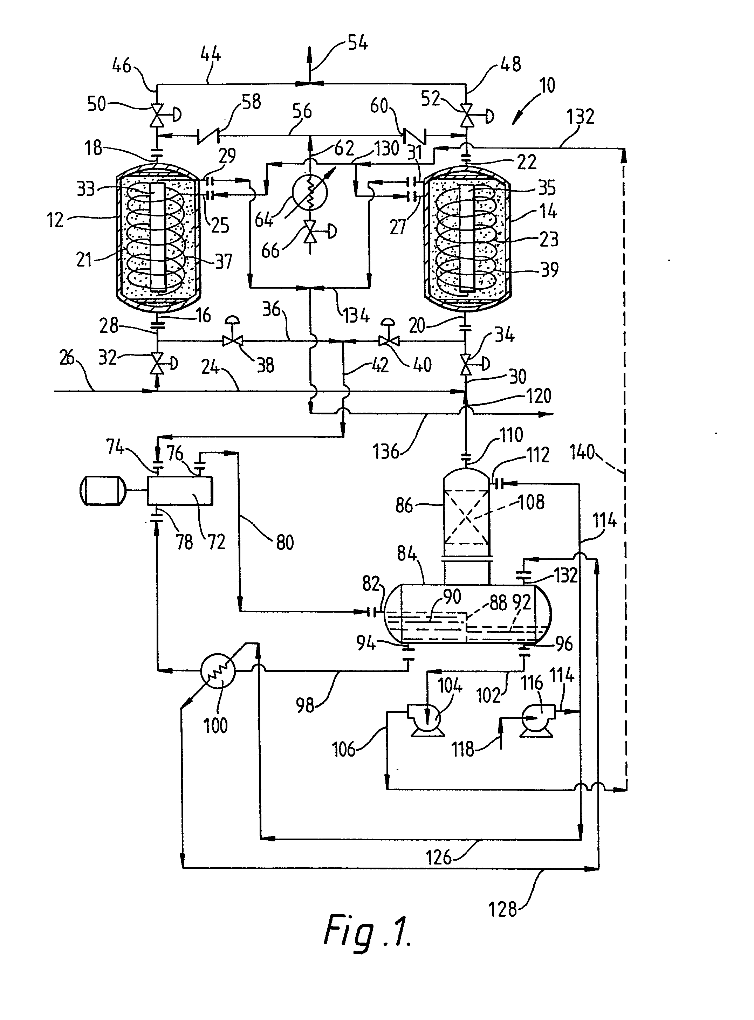

In order that the invention will more readily be understood, the following description is given, merely by way of example, reference being made to the accompanying drawing, in which the only Figure is a schematic flow diagram of one embodiment of apparatus according to the invention, use of the apparatus illustrating the process of the invention.

The illustrated apparatus of the present invention is designated by the numeral 10 and comprises a pair of adsorbers 12 and 14, which have inlet connections 16, 20, have outlet connections 18, 22 respectively, to cause the gases to flow through a bed of solid adsorbent in each adsorber. Activated carbon is the preferred adsorbent, in that it is particularly suitable for adsorbing light hydrocarbon vapours of the type found in air-hydrocarbon vapour mixtures and for vacuum regeneration.

Adsorbers 12 and 14 have disposed therein, respectively, heat transfer coils 21 and 23 provided with inlet connections 25 and 27, and outlet connections 29 and 31, respectively. The heat transfer coils 21 and 23 are of a configuration and are positioned within the beds of solid adsorbent contained within the adsorbers 12 and 14 such that heat is readily transferred from the beds of solid adsorbent to a cooling medium flowed through the heat transfer coils. Preferably the coils 21 and 23 include centrally positioned cylinders 33 and 35, the top ends of which are connected to the outlet connections 29 and 31, and the bottom ends of which are connected to vertically positioned helical coils 37 and 39, which in turn are connected to the inlet connections 25 and 27, respectively. Thus, cooling medium flowed through the heat transfer coils 21 and 23 passes downwardly through the helical coils 37 and 39 thereof and upwardly through the centrally positioned cylinders 33 and 35 thereof.

An inlet header 24 is connected to an inlet conduit 26, and to adsorbers 12 and 14, via a pair of conduits 28 and 30 having switching valves 32 and 34, respectively. Also connected to conduits 28 and 30, but at points thereon between the valves 32 and 34 and the connection 16 and 20 of the adsorbers 12 and 14, is a header 36, itself having switching valves 38 and 40. Between valves 38 and 40, the header 36 is connected to a conduit 42. A residue gas header 44 is connected via a pair of conduits 46 and 48, provided with valves 50 and 52, to the connections 18 and 22 of the adsorbers 12 and 14. Conduit 54, which may include a flame arrestor (not shown), is connected to the header 44 between valves 50 and 52 and serve to vent residue gas to atmosphere. A stripping air header 56 is connected to the conduits 46 and 48, below valves 50 and 52 and includes a pair of check valves 58 and 60, arranged on either side of the conduit 62, to which is connected an air heater 64 and an air inlet valve 66. The end of the conduit 62 upstream of valve 66 is left open to atmosphere and an air filter (not shown) may be attached thereto to prevent solid impurities entering the adsorbers. The open end of the conduit 54 can also include a flame arrestor (not shown).

The other end of conduit 42 is connected to the suction inlet 74 of a vacuum pump 72. This is preferably of the liquid seal or liquid ring type, such a pump being capable of producing a high vacuum and is relatively inexpensive. Conventionally, such a pump uses a liquid seal which is circulated through the pump and can be confined in a closed circuit and cooled, which keeps the pump and the gases flowing therethrough cool, the presence of the liquid seal precluding any possibility of explosions, since the gas cannot approach its auto-ignition temperature, nor can sparking occur due to mechanical failures within the pump.

The pump 72 includes a discharge connection 76 and a seal liquid inlet connection 78 for returning seal liquid thereto. A conduit 80 is connected to the discharge connection 76 and to the inlet 82 of a separator 84, the top of which is preferably integral with an absorber 86, although the absorber 86 and separator could be separate vessels.

The separator 84 is a three-phase separator capable of separating the seal liquid for the pump 72, condensed hydrocarbons and an air-hydrocarbon vapour mixture from each other. The separator 84 shown includes a weir 88 which divides the separator into a forward compartment 90 and a rear compartment 92. The liquids entering the separator are separated in the forward compartment, the seal liquid being heavier and emissable with the condensed hydrocarbon liquids, so that the seal liquid accumulates in the bottom of the compartment 90 from where it is removed via an outlet connection 94. Condensed hydrocarbon liquids spill over the weir into compartment 92 and hydrocarbon-rich liquid absorbent from the absorber 86 enters the compartment 92 by way of the open bottom of the absorber 86 and also accumulates in the compartment 92. Rich liquid absorbent-condensed hydrocarbon liquid mixture is removed from the separator 84 by way of an outlet connection 96, while the separated air-hydrocarbon vapour mixture passes from the separator 84 into the absorber 86.

A conduit 98 extends from connection 94 to seal the liquid inlet connection 78 of the pump 72 and passes through a cooler 100. In certain instances, a circulation pump can be provided in conduit 98 between the separator 84 and cooler 100, which may be in the form of a heat-exchanger, which cools the seal liquid by passing it in heat-exchange relationship with the stream of liquid of the same characteristics as that used as the absorption medium in the absorber 86. Rich liquid absorbent-condensed hydrocarbon liquids may be discharged from compartment 92 via outlet 96, conduit 102, pump 104 and conduit 106, which can lead the rich liquid absorbent-condensed hydrocarbon liquids mixture to a storage facility (not shown) or to the heat transfer coils 21 and 23 disposed in the adsorbers 12 and 14 as will be described further hereinbelow.

The absorber 86 includes a section of packing material 108, for example vapour liquid contact trays or the like, disposed in the top portion to bring about intimate contact between the liquid absorbent flowing downwardly and the air-vapour mixture flowing upwardly. Residue gas outlet connection 110 and liquid absorbent inlet connection 112 are provided above the packed section 108, the lean liquid absorbent inlet 112 being connected via conduit 114 to a lean liquid absorbent inlet 118, the liquid being delivered by pump 116. A portion of the pumped liquid is fed via line 126 to heat exchanger 100 and thence via line 128 to the inlet connection 132 of the absorber 86, or alternatively to a second lean liquid absorbent inlet (not shown) on absorber 86 below connection 112.

In certain cases, the lean liquid absorbent may be too warm to use directly as an absorbent and seal fluid coolant, and a heat exchanger (not shown) can be disposed in conduit 114 so that it may be cooled, e.g. by water or a refrigerant.

The residue gas stream produced in the absorber 86 leaves _via_ connection 110 and flows into conduit 128 and thence to header 24.

Cooling medium inlet and outlet headers 130 and 134 are connected to the inlet connections 25, 27 and outlet connections 29, 31 of the coils 21 and 23 in the adsorbers 12 and 14, header 130 being connected via a conduit 132 to a source of cooling medium, while a conduit 136 is connected to the header 134 for conducting cooling medium therefrom. Any suitable cooling medium can be utilised to cool the adsorbent beds, such as cooling water or other available process stream having a low enough temperature to effect the cooling. If the cooling medium is circulated through the heat transfer coils in a closed circuit, a cooler can be utilised to remove the heat therefrom.

If a separate cooling medium is flowed through the heat transfer coils 21 and 23, the rich liquid absorbent-condensed hydrocarbon stream exiting the apparatus 10 by way of a conduit 106 is conducted to a storage facility. However, in a preferred embodiment of the present invention, the conduit 106 is connected to the cooling medium inlet conduit 132 by a conduit 140 (shown in dashed lines) whereby the rich liquid absorbent-condensed hydrocarbon stream is used as the coolant for coils 21, 23 and is then fed from the outlet header 134 to a storage facility. Thus, the rich liquid absorbent-condensed hydrocarbon mixture is continuously flowed through the heat transfer coils 21 and 23 whereby the beds of adsorbent contained in the adsorbers 12 and 14 are continuously cooled. Whatever cooling medium is used, switching valves can be disposed in the headers 130 and 134 and operated in a manner whereby the cooling medium is caused to flow through the heat transfer coils 21 and 23 only when the inlet air-hydrocarbon vapour mixture is flowing through the adsorber in which the heat transfer coil is disposed whereby the bed of adsorbent is prevented from overheating.

The switching of valves 32, 34, 38, 40, 50, 52, 56 and 124 can be effected manually, but is preferably automatically controlled by a conventional cycle controller. The length of each cycle can be controlled by a timer or other instrument sensing one or more variables in the operation of the apparatus, such as the degree of vacuum achieved in the adsorbent bed being generated, the composition of the gas stream being vented to the atmosphere etc. If switching valves are included in the cooling medium inlet and outlet headers 130 and 134, such switching valves can be controlled by the cycle controller or they can be controlled by a conventional instrument sensing the temperature of the residue gas exiting the adsorbers or the temperature of the bed of adsorbent through which the inlet air-hydrocarbon vapour mixture is flowing.

In operation, the various valves are operated so that the inlet air-hydrocarbon vapour mixture is caused to flow through one of the adsorbers 12 or 14, while the other is being regenerated. For example, during a first cycle, valves 32 and 50 are opened and the remaining valves closed, whereby the mixture flows into the adsorber 12 but not into the adsorber 14 and flows from adsorber 12 _via_ conduit 46 and header 44 to the air vent conduit 54 with valve 38 closed and valve 40 opened, the adsorbent fluid within the adsorber 14 communicates with the suction connection 74 of vacuum pump 72, at this time the valve 66 being closed.

During this first part of the cycle, gases flowing through adsorber 12 have the hydrocarbons adsorbed on the bed and a substantially hydrocarbon-free air is vented to atmosphere. Simultaneously, the adsorbent disposed in adsorber 14 is evacuated and the hydrocarbons are desorbed therefrom. A hydrocarbon-rich air-hydrocarbon vapour mixture is withdrawn from the bed in adsorber 14 and flows through the vacuum pump 72. A cooled seal liquid, preferably water or a mixture of water and a substance which functions as an anti-freeze agent in the winter and as an agent to lower seal fluid vapour pressure in the summer, e.g. ethylene glycol, flows into the vacuum pump 72. The intimate contact of the air-hydrocarbon mixture with the cool seal liquid while flowing through the vacuum pump cools the vapour mixture and causes heavy hydrocarbons contained therein to be condensed. The resulting stream of hydrocarbon-rich air-hydrocarbon vapour mixture and seal liquid and condensed hydrocarbon liquids flows from the pump into the separator 84. While passing through the separator, the air-hydrocarbon vapour mixture, seal liquid and condensed hydrocarbons are separated from each other in the manner previously described, the separated condensed hydrocarbon liquids spilling over the weir 82 and flowing into the compartment 92 where they combine with rich liquid absorbent which flows into the compartment 92 from the absorber 86 and is removed therefrom by way of the connection 96 to a storage facility.

A stream of lean liquid absorbent is pumped from a source by the pump 116 and flows into the absorber 86 as well as through the heat exchanger 100 as described above. The absorbent flows downwardly within the absorber and intimately contacts the separated air-hydrocarbon mixture which is flowing upwardly through the separator so that the hydrocarbons are absorbed and removed, so that a residue gas stream contains a major portion of air and a minor portion of hydrocarbons. This stream leaves the absorber and flows into the header 24 where it combines with the inlet air-hydrocarbon vapour mixture and flows through the absorber 12 where the hydrocarbons are adsorbed therefrom.

During the latter part of this cycle, after a major portion of the hydrocarbons adsorbed in the bed of adsorbent within the adsorbent 14 have been desorbed therefrom by the vacuum pump 72, valve 66 in conduit 62 is opened, whereby a relatively small quantity of hydrocarbon-free air for the atmosphere enters, is heated, flows through check valve 60 into the adsorber 14. This heated air flows through the bed of adsorbent and is withdrawn therefrom by the vacuum pump 72 as described previously. The air serves to strip additional hydrocarbons from the bed which were not desorbed by the action of the vacuum pumping.

The stream of liquid absorbent is divided into a first portion which flows via line 126, heat exchanger 100 and line 128 to a position below the packed section 108 and a second portion which flows direct through line 114 to a position above the packed section 108 of absorber 86. The first portion is heated and the second portion is relatively cool.

Thus, the combination of the initial evacuation of the adsorber 14 by vacuum pumping, stripping the adsorbent bed with heated hydrocarbon-free air and the use of a divided stream of liquid absorbent, part of which is heated, brings about the regeneration of the bed to a greater degree than is possible by vacuum pumping alone. This more complete regeneration of the bed increases the capacity of the bed to adsorb additional hydrocarbons, increases the overall efficiency of the apparatus 10 and increases the service life of the

- 13 -

adsorbent.

After the adsorbent fed within the adsorber 14 has been fully regenerated and that within the adsorber 12 has been fully loaded with hydrocarbons, the switching valves are reversed, so that adsorber 14 acts to adsorb the hydrocarbons from the incoming mixture and from the absorber 86, whilst the adsorber 12 is regenerated in the same manner as described above. The flow pattern is continuously changed or cycled whereby when the adsorbent bed through which the inlet vapour mixture is flowing becomes loaded with adsorbed hydrocarbons, the inlet mixture is caused to flow into the bed which has thus been regenerated.

In the embodiment shown in the drawing, the rich liquid absorbent-condensed hydrocarbon mixture pumped from the separator 84 by the pump 104 is conducted by the conduits 106, 140 and 132 to the cooling medium inlet header 130 through the heat transfer coils 21 and 23 in adsorbers 12 and 14 and leaves by way of header 134 and conduit 136 to a storage facility. Alternatively, as indicated above, the conduit 106 can lead the rich liquid absorbent-condensed hydrocarbon mixture directly to storage facilities and a separate cooling medium such as cooling water, etc., can be fed through the heat transfer coils 21 and 23.

It has been found that by cooling the beds of solid adsorbent and maintaining the temperature thereof below about 66°C, the heat released by exothermic reactions taking place in the beds and the heat of adsorption liberated as hydrocarbons are adsorbed on the beds is removed therefrom and accelerated, exothermic reactions resulting in the runaway heating of the beds is prevented.

The apparatus is particularly suitable for recovering vapourised gasolene light ends mixed with air produced as a result of loading gasolene into tank trucks and other vessels. In this application, the air-gasolene vapour mixture is processed in the apparatus and the liquid absorbent used is gasolene which can be pumped from a storage facility into the absorber 86 from which the rich gasolene and condensed hydrocarbons are returned to the gasolene storage. Preferably, the lean gasolene is withdrawn from a separate storage tank from that to which the rich liquid absorbent-condensed hydrocarbon mixture is conducted to ensure the efficient absorption of the vapourised hydrocarbon light ends in the absorber 86.

### Example

A typical gasolene truck loading terminal has the following loading pattern:-

maximum instantaneous rate - 8000 litres per minute

Maximum throughput in 15 minutes - 60,000 litres

Maximum throughput in 1 hour       - 174,545 litres

Maximum throughput in 4 hours      - 610,909 litres

Maximum throughput daily           - 349,090 litres

The gasolene loaded is deemed to have the following properties:-

Summer: 543 millimetres mercury rvp, $24^{\circ}$C maximum

Winter: 760 millimetres mercury rvp, $-12^{\circ}$C minimum

It is recognised that the hydrocarbon concentration of the air-hydrocarbon vapour generated by loading gasolene into the trucks will vary according to gasolene volatility and the degree of air saturation attained. Based on the above gasolene properties and other experience, a desired hydrocarbon concentration of 35% by volume is selected.

The apparatus is designed for an approximately 15 minutes cycle time and consequently it is necessary to design each adsorption vessel 12 and 14 to handle a net air-hydrocarbon vapour influent of 10 cubic metres per minute and 75 cubic metres per minute each cycle, based on a 1.2 vapour growth factor. Approximately 4100 kilograms of the appropriate activated carbon is chosen and distributed equally in two 2.14 metre in diameter by approximately 2.4 metre in height adsorption vessels 12 and 14. These vessels are operated near ambient temperature and only slightly above atmospheric pressure during the adsorption cycle. A liquid ring vacuum pump 72 with a 22.4 kilowatt output electric motor is provided for regeneration of the beds of carbon after each adsorption cycle. Very effective regeneration of the carbon beds can be accomplished in each cycle by the introduction, under high vacuum conditions, of approximately .85 standard cubic metres of air heated to 93°C to 149°C. The regeneration apparatus provided allows attainment of 49 millimetres of mercury absolute pressure each cycle with the vacuum pump 72.

To accomplish the object of recovery, concentrated hydrocarbon vapours containing only 5 to 20% by volume air are discharged from the vacuum pump 72 to a 61 centimetre diameter by approximately 3.6 metre high packed absorption column 86 integrally connected to a 1 metre diameter by approximately 2.4 metre length separator 84, where the major portion of the hydrocarbon vapours are absorbed and thereby recovered into a downward flowing system of gasolene. The minor portion of hydrocarbon vapours not immediately absorbed into the gasolene absorbent leaves the top of the absorber where they flow to whichever adsorber 12 or 14 is in the adsorption mode. Eventually almost all of the hydrocarbon vapours are recovered.

The pumps 104 and 116 are centrifugal pumps, each with 3.73 kilo watt output electric motor drivers. Pump 116 circulates 436 litres per minute of gasolene from storage facilities for purposes of providing the absorption medium and to provide the necessary seal fluid cooling medium. Pump 104 withdraws 427 litres of gasolene per minute from the separator 84 and feeds it to coils 21 and 23 to maintain the temperature in adsorbers 12 and 14 below 66°C.

The apparatus described above can be expected to remove and recover the hydrocarbon vapours generated from the transport loading rack such that less than 10 milligrams of hydrocarbons will be vented to the atmosphere per litre of gasolene loaded.

- 17 -

C L A I M S

1.  A process for recovering hydrocarbons from an inlet air-hydrocarbon vapour mixture comprising passing said inlet mixture through a first bed of solid absorbent, having an affinity for hydrocarbons, whereby hydrocarbons are adsorbed on said bed and a residue gas stream of substantially hydrocarbon-free air is produced, venting a substantially hydrocarbon-free air to the atmosphere, evacuating a second bed of solid adsorbent having hydrocarbons adsorbed thereon by vacuum pumping to desorb the hydrocarbons from the bed, contacting the air-hydrocarbon mixture produced during the evacuation with a liquid absorbent having an affinity for hydrocarbons, whereby a major portion of the hydrocarbons are removed therefrom and a residue gas stream comprising air and a minor portion of hydrocarbons are produced, combining the residue gas stream with the inlet air-hydrocarbon vapour mixture, whereby hydrocarbons contained therein are adsorbed on the first bed of a solid adsorbent, periodically changing the flow pattern of the inlet air-hydrocarbon mixture and changing the bed of solid adsorbent being evacuated, whereby, when the bed through which the inlet air-hydrocarbon mixture is flowing becomes loaded with adsorbed hydrocarbons, the inlet air-hydrocarbon mixture is caused to flow through the bed which has just been evacuated, characterised in that the beds of solid absorbed are cooled to prevent the beds from overheating.

2.  A process according to claim 1, characterised in that the vacuum pumping is carried out using a liquid seal vacuum pump, in that an air-hydrocarbon mixture containing liquids from said liquid seal vacuum pump and condensed hydrocarbon liquids is produced during the
evacuation of adsorber bed, in that the liquid from the
liquid seal pump and said condensed hydrocarbon liquids
are separated from each other and from the air-hydrocarbon
vapour mixture, in that the separated vacuum pump liquid
is cooled, in that the cooled vacuum pump liquid is
recycled to the liquid seal vacuum pump, in that the
separated condensed hydrocarbon liquid is combined with
the hydrocarbon-rich liquid absorbent, and in that the
resulting combined liquid mixture is used as a heat
exchange medium to cool said beds.

3. A process according to claim 1 or 2,
characterised in that a quantity of hydrocarbon-free
air is introduced into said second bed while
evacuating said bed, whereby additional hydrocarbons
are stripped from said bed and an additional air-
hydrocarbon mixture is produced.

4. A process according to claim 3, characterised
in that the hydrocarbon-free air is heated prior to
introducing into said bed.

5. A process according to any preceding claim,
characterised in that the flow of liquid absorbent is
divided into a first portion and a second portion, in
that the first portion is passed in heat exchange
relationship with the seal liquid of the vacuum pump to
heat the first portion and cool the seal liquid, in that
the thus heated first portion is contacted with the air-
hydrocarbon mixture produced during evaporation, and
in that the second portion of the liquid absorbent
is also contacted with the air-hydrocarbon mixture
produced during evacuation.

6. A process according to claim 5, characterised in that the first and second portions of the liquid absorbent are fed to a contact tower and in that the second portion is fed at a higher level thereof than the first heated portion.

7. A process according to any preceding claim, characterised in that the hydrocarbons contained in the inlet air-hydrocarbon mixture are vaporised gasolene light ends, in that the liquid absorbent utilised is gasolene, and in that the gasolene is continuously recycled between the absorber and a source of stored gasolene.

8. Apparatus for recovering hydrocarbons from an air-hydrocarbon vapour mixture, comprising a pair of adsorbers (12,14) containing beds of solid adsorbent having an affinity for hydrocarbons and having first (16,20) and second (18,22) connections on opposite sides of said beds, valves (32,34) associated with said first connections for selectively causing air-hydrocarbon vapour mixture to flow through one or the other of said adsorbers and from the associated second connection to atmosphere, a vacuum pump (72) having a suction connection selectively connectable via valve means (38,40) to the other of said adsorbers (12,14), an absorber (86) connected to the discharge connection of the vacuum pump for contacting the air-hydrocarbon vapour mixture with a liquid absorbent, characterised in that the heat transfer coils (21,23) are disposed in each of said adsorbers (12,14) and in that means (25,27,29, 31,130-140) are provided to circulate a cooling heat transfer medium through said coils.

9. Apparatus according to claim 8, characterised in that the vacuum pump (72) is a liquid seal vacuum pump, in that the feed to the absorber (86) is through a first feed pipe (126,128), which is connected to one side of the heat exchanger (100), the other side of which is connected to the seal liquid circuit (80,98,78) of the vacuum pump (72), whereby the seal liquid is cooled and the liquid absorbent fed through the first feed pipe (126,128) is heated before being fed to the absorber (86), in that the absorber is a contact tower (86), in that a separator (84) for separating an air-hydrocarbon vapour mixture, condensed hydrocarbon liquids and seal liquid from each other and combining rich liquid absorbent with condensed hydrocarbon liquids is connected to the discharge (76) of said vacuum pump, in that a connection (98) is provided for feeding the separated seal liquid from said separator to the liquid seal of the pump, in that the liquid absorber contact tower (86) is mounted on said separator, whereby rich liquid absorbent is returned to said separator, in that a second connection (96) is provided for removing separated hydrocarbon liquids from the separator and in that a pump (104) pumps this to act as the cooling medium.

10. Apparatus according to claim 9, characterised in that the second feed pipe (120) is connected to said contact tower (86) at a point (112) above the point (114) at which said first feed pipe (126,116) is connected thereto.

11. Apparatus according to claims 8, 9 or 10, characterised in that an air inlet (62,66) is provided for selectively allowing air to be drawn in via said second connection to said other of the adsorbers (12,14) during evacuation thereof.

12. Apparatus according to claim 11, characterised in that a heater (64) is provided for heating air passing through said air inlet.

13. Apparatus according to any one of claims 8 to 12, characterised in that said heat transfer coils each comprise a helical coil (37,39) in said bed and a cylinder (33,35) arranged along the axis of the respective helical coil, each cylinder being connected in series with its associated helical coil.

Fig.1.

**European Patent Office**

## EUROPEAN SEARCH REPORT

| | DOCUMENTS CONSIDERED TO BE RELEVANT | | |
|---|---|---|
| Category | Citation of document with indication, where appropriate, of relevant passages | Relevant to claim |
| Y | EP - A - 0 022 315 (JOHN ZINK CO.) <br><br> * the entire document * | 1-12 |
| Y | US - A - 2 157 565 (STUART PEXTON et al.) <br><br> * page 1, left-hand column, lines 5-30; claim 1; figure * | 1,8 |
| A | HEINZ BECKER et al.: ORGANIKUM 1964, Deutscher Verlag der Wissenschaften BERLIN (DE) pages 4-7 <br><br> * pages 4-7 * | 13 |

### CLASSIFICATION OF THE APPLICATION (Int. Cl. 3)

B 01 D 53/04
B 67 D  5/06

### TECHNICAL FIELDS SEARCHED (Int.Cl. 3)

B 01 D 53/00
B 67 D  5/00

### CATEGORY OF CITED DOCUMENTS

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

| | | |
|---|---|---|
| X | The present search report has been drawn up for all claims | |
| Place of search <br> THE HAGUE | Date of completion of the search <br> 19-04-1982 | Examiner <br> HOFER |

EPO Form 1503.1  06.78